# EUROPEAN PATENT APPLICATION

(11) **EP 4 481 720 A1**
(43) Date of publication of application: **25.12.2024**
(21) Application number: 23799646.7
(22) Date of filing: 02.05.2023
(51) Int. Cl.: G09G 3/19, G02F 1/163

(54) **APPARATUS AND METHOD FOR DRIVING ELECTROCHROMIC DEVICE**

(30) Priority: 02.05.2022 KR 20220054106
(71) Applicant: SKC Co., Ltd., Suwon-si, Gyeonggi-do 16338 (KR)
(72) Inventor: OH, Seung Bae, Suwon-si Gyeonggi-do 16338 (KR); LA, Yong Sang, Suwon-si Gyeonggi-do 16338 (KR)
(74) Representative: BCKIP Part mbB
(86) International application number: PCT/KR2023/005958
(87) International publication number: WO 2023/214765

(57) **Abstract**

There is provided an apparatus for driving an electrochromic device comprises: a memory; and a processor is configured to obtain operating environment information including at least one of solar altitude, variable azimuth angle, and temperature according to an operating environment of an electrochromic device operating so that transmittance for a specific wavelength is adjusted through color change when electricity is applied, to generate a control signal corresponding to a capacitance to be applied to the electrochromic device on a basis of the operating environment information, to apply the capacitance corresponding to the control signal to the electrochromic device to drive the electrochromic device so that the transmittance is adjusted, and to generate the control signal by reflecting climate characteristics obtained by analyzing the operating environment information.

## Description

### TECHNICAL FIELD

Embodiments relate to an apparatus and method for driving an electrochromic device that exhibits a light transmission variable function based on an electrochromic principle.

This work was supported by Korea Institute of Energy Technology Evaluation and Planning grant funded by the Korea government (Ministry of Trade, Industry and Energy) (Project unique No.: 1415181538; Project No.: 20192010107400; R&D project: Development of energy demand management core technology; Research Project Title: Development of energy self-sufficient smart window technology; and Project period: 2022.01.01. ~ 2022.09.30.).

### BACKGROUND

With the recent increase in concerns for environmental protection, there has been a corresponding increase in interest in technologies that improve energy efficiency. For example, research and development on technologies such as a smart window and energy harvesting are being actively carried out.

The smart window refers to an active control technology that enhances energy efficiency by adjusting the transmittance of light from the outside, and can provide a comfortable environment to users. It is a foundation technology that can be commonly applied to various industries. The smart windows include an electrochromic device that undergoes an electrochemical oxidation or a reduction reaction with an applied power source, leading to changes in the intrinsic color of an electrochromic active material or an optical property, such as light transmittance.

When a film including this electrochromic device is applied to a window of an architectural structure, the amount of energy introduced into indoor areas may be adjusted by controlling the transmittance of a specific wavelength of solar rays through color change when electricity is applied.

The electrochromic device or film including the same according to the related art exhibited a nearly uniform characteristic of the chromic rate of the electrochromic device because a predetermined amount of electricity is supplied to the electrochromic device during the color change operation. There has been a problem where the uniform chromic rate of the electrochromic device has not satisfied diverse needs of consumer under various operating environments.

### SUMMARY

According to an embodiment, there is provided an apparatus and method for driving an electrochromic device that is capable of allowing transmittance of the electrochromic device to be adjusted by varying capacitance applied to the electrochromic device according to solar altitude, azimuth angle, temperature, or the like that depends on an operating environment of the electrochromic device.

However, the problem to be solved by the present disclosure is not limited to that mentioned above, and other problems to be solved that are not mentioned may be clearly understood by those of ordinary skill in the art to which the present disclosure belongs from the following description.

There is provided an apparatus for driving an electrochromic device, according to a first aspect, the apparatus including information acquisition unit configured to obtain operating environment information including at least one of solar altitude, variable azimuth angle, and temperature according to an operating environment of the electrochromic device that operates so that transmittance for a specific wavelength is adjusted through color change when electricity is applied, a control unit configured to generate a control signal corresponding to a capacitance to be applied to the electrochromic device on a basis of the operating environment information obtained by the information acquisition unit, and a driving unit configured to apply the capacitance corresponding to the control signal to the electrochromic device to drive the electrochromic device so that the transmittance is adjusted, and the control unit further configured to generate the control signal by reflecting climate characteristics obtained by analyzing the operating environment information.

There is provided a method of driving an electrochromic device, according to a second aspect, performed by an apparatus for driving an electrochromic device that operates so that transmittance for a specific wavelength is adjusted through color change when electricity is applied, the method including obtaining operating environment information including at least one of solar altitude, variable azimuth angle, and temperature according to an operating environment of the electrochromic device, determining a capacitance to be applied to the electrochromic device on the basis of the obtained operating environment information, and applying the determined capacitance to the electrochromic device to drive the electrochromic device so that the transmittance is adjusted, and climate characteristics obtained by analyzing the operating environment information are reflected when the capacitance is determined.

There is provided a non-transitory computer-readable storage medium storing a computer program according to a third aspect, in which the computer program includes instructions for allowing a processor to perform the method of driving an electrochromic device.

According to an embodiment, there is an effect of creating a pleasant indoor environment in accordance with a changing operating environment by controlling the visible light transmittance and chromic rate by changing capacitance applied to an electrochromic device according to solar altitude, azimuth angle, temperature, or the like, which depends on an operating environment of the electrochromic device, so that the transmittance of the electrochromic device is adjusted.

### BRIEF DESCRIPTION OF THE DRAWINGS

FIG. 1 is a block diagram of an apparatus for driving an electrochromic device, according to an embodiment of the present disclosure.
FIG. 2 is a block diagram conceptually illustrating a function of an electrochromic device driving program according to an embodiment of the present disclosure.
FIG. 3 is a configuration diagram of an information acquisition unit illustrated in FIG. 2, according to an embodiment of the present disclosure.
FIG. 4 is a structural view of an electrochromic device according to an embodiment of the present disclosure.
FIG. 5 is a structural view of an electrochromic device according to another embodiment of the present disclosure.
FIG. 6 is a flowchart for describing a method of driving an electrochromic device according to an embodiment of the present disclosure.

### DETAILED DESCRIPTION

The advantages and features of the embodiments and the methods of accomplishing the embodiments will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims.

Terms used in the present specification will be briefly described, and the present disclosure will be described in detail.

In terms used in the present disclosure, general terms currently as widely used as possible while considering functions in the present disclosure are used. However, the terms may vary according to the intention or precedent of a technician working in the field, the emergence of new technologies, and the like. In addition, in certain cases, there are terms arbitrarily selected by the applicant, and in this case, the meaning of the terms will be described in detail in the description of the corresponding invention. Therefore, the terms used in the present disclosure should be defined based on the meaning of the terms and the overall contents of the present disclosure, not just the name of the terms.

Throughout the description of the present specification, in the case in which each film, window, panel, structure, layer, or the like is described as being formed "on" or "under" another film, window, panel, structure, layer, or the like, it means not only that one constituent element is "directly" formed on or under another constituent element, but also that one constituent element is "indirectly" formed on or under another constituent element with other element(s) interposed therebetween.

In addition, the reference for on or under with respect to each constituent element may be described with reference to the drawings. For the sake of description, the sizes of individual constituent elements in the appended drawings may be exaggeratingly depicted and do not indicate the actual sizes for the applications. In addition, like reference numerals indicate like constituent elements throughout the specification.

When it is described that a part in the overall specification "includes" a certain component, this means that other components may be further included instead of excluding other components unless specifically stated to the contrary.

Throughout the specification, unless otherwise specified, singular expressions are to be interpreted as including both the singular and plural forms as understood from the context.

In addition, all numbers and expression related to the quantities of components, reaction conditions, and the like used herein are to be understood in all cases as being modified by the term "about," unless otherwise indicated.

The terms first, second, and the like are used herein to describe various constituent elements, and the constituent elements should not be limited by the terms. The terms are used only for the purpose of distinguishing one constituent element from another.

In addition, a term such as a "unit" or a "portion" used in the specification means a software component or a hardware component such as FPGA or ASIC, and the "unit" or the "portion" performs a certain role. However, the "unit" or the "portion" is not limited to software or hardware. The "portion" or the "unit" may be configured to be in an addressable storage medium, or may be configured to reproduce one or more processors. Thus, as an example, the "unit" or the "portion" includes components (such as software components, object-oriented software components, class components, and task components), processes, functions, properties, procedures, subroutines, segments of program code, drivers, firmware, microcode, circuits, data, database, data structures, tables, arrays, and variables. The functions provided in the components and "unit" may be combined into a smaller number of components and "units" or may be further divided into additional components and "units". Hereinafter, the embodiment of the present disclosure will be described in detail with reference to the accompanying drawings so that those of ordinary skill in the art may easily implement the present disclosure. In the drawings, portions not related to the description are omitted in order to clearly describe the present disclosure.

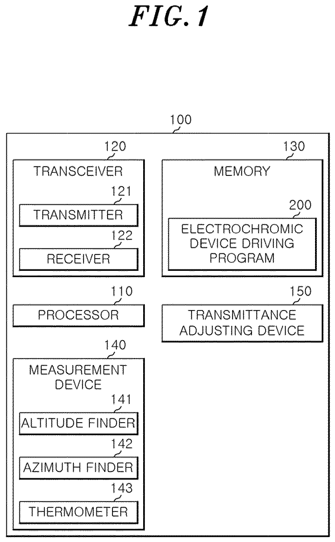

FIG. 1 is a block diagram illustrating an apparatus for driving an electrochromic device, according to an embodiment of the present disclosure.

With reference to FIG. 1, an apparatus 100 of driving an electrochromic device may include a processor 110, a transceiver 120, a memory 130, a measurement device 140, and a transmittance adjusting device 150.

The processor 110 may control an overall operation of the apparatus 100 for driving an electrochromic device.

The processor 110 may receive, using the transceiver 120, at least one of operating environment information including at least one of solar altitude, variable azimuth angle, and temperature, and installation environment information including at least one of fixed azimuth angle and latitude of an electrochromic device, according to an operating environment of the electrochromic device that operates so that transmittance for a specific wavelength is adjusted through color change when electricity is applied.

In the present disclosure, it is described that at least one of operating environment information or installation environment information is received through the transceiver 120, but the present disclosure is not limited thereto. That is, according to an embodiment, the apparatus 100 for driving an electrochromic device may include an input/output device (not illustrated), the apparatus 100 for driving an electrochromic device may receive at least one of operating environment information or installation environment information using the input/output device (not illustrated), and at least one of operating environment information or installation environment information may be generated within the apparatus 100 for driving an electrochromic device.

The processor 110 may obtain operating environment information including at least one of solar altitude, variable azimuth angle, and temperature according to an operating environment of an electrochromic device that operates so that transmittance for a specific wavelength is adjusted through color change when electricity is applied, generate a control signal corresponding to capacitance to be applied to the electrochromic device on the basis of the operating environment information, and apply the capacitance corresponding to the control signal to the electrochromic device to drive the electrochromic device so that the transmittance is adjusted, and the processor may reflect climate characteristics obtained by analyzing the operating environment information to generate the control signal.

The transceiver 120 may include a transmitter 121 and a receiver 122.

The memory 130 may store an electrochromic device driving program 200 and information required for execution of the electrochromic device driving program 200.

The measurement device 140 may include an altitude finder 141, an azimuth finder 142, and a thermometer 143, in which the altitude finder 141 may measure the altitude of the sun, the azimuth finder 142 may measure the variable azimuth angle or fixed azimuth angle of the electrochromic device, and the thermometer 143 may measure the temperature of the electrochromic device.

The transmittance adjusting device 150 may apply capacitance corresponding to the generated control signal to the electrochromic device so that transmittance of a window is adjusted.

In the present specification, the electrochromic device driving program 200 may mean software that includes instructions for receiving operating environment information including at least one of solar altitude, variable azimuth angle, and temperature according to an operating environment of an electrochromic device that operates so that transmittance for a specific wavelength is adjusted through color change when electricity is applied, generating a control signal corresponding to capacitance to be applied to the electrochromic device, and applying the capacitance corresponding to the control signal to the electrochromic device to drive the electrochromic device so that transmittance is adjusted.

The processor 110 may load the electrochromic device driving program 200 and information required for execution of the electrochromic device driving program 200 from the memory 130 in order to execute the electrochromic device driving program 200.

The processor 110 may execute the electrochromic device driving program 200 to apply capacitance corresponding to the control signal to the electrochromic device, thereby allowing the transmittance for a specific wavelength of the electrochromic device to be adjusted.

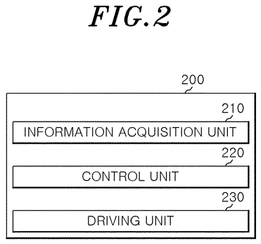

The function and/or operation of the electrochromic device driving program 200 will be described in more detail with reference to FIG. 2.

FIG. 2 is a block diagram conceptually illustrating a function of an electrochromic device driving program according to an embodiment of the present disclosure.

With reference to FIG. 2, the electrochromic device driving program 200 may include an information acquisition unit 210, a control unit 220, and a driving unit 230.

The information acquisition unit 210, the control unit 220, and the driving unit 230 illustrated in FIG. 2 are conceptually divided for easily describing the function of the electrochromic device driving program 200, but the present disclosure is not limited thereto. According to embodiments, the functions of the information acquisition unit 210, the control unit 220, and the driving unit 230 may be mergeable/separable and may be implemented as a series of instructions included in one program. The functions of the information acquisition unit 210, the control unit 220, and the driving unit 230 included in the electrochromic device driving program 200 will be described below.

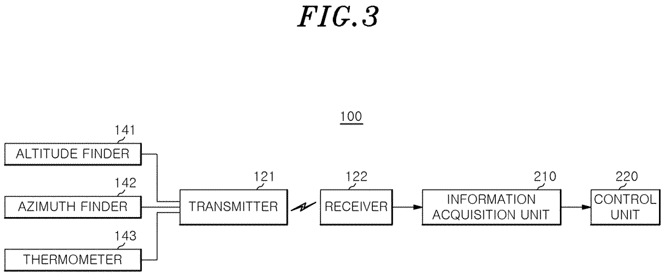

FIG. 3 is a configuration diagram of the apparatus for driving an electrochromic device illustrated in FIG. 1, according to an embodiment of the present disclosure.

According to an embodiment, as illustrated in the drawing, the apparatus 100 of driving an electrochromic device may include the measurement device 140, and may include, for example, the altitude finder 141, the azimuth finder 142, or the thermometer 143. When a film including an electrochromic device and the like is applied to a window, the altitude finder 141, the azimuth finder 142, and the thermometer 143 may be installed on an outer side of the window. Further, the transmitter 121 may be installed on an outer side of the window, and the receiver 122 may be installed on an inner side of the window.

The information acquisition unit 210 is configured to obtain operating environment information including at least one of solar altitude, variable azimuth angle, and temperature according to an operating environment of the electrochromic device that operates so that transmittance for a specific wavelength is adjusted through color change when electricity is applied.

For example, the apparatus 100 of driving an electrochromic device may include the altitude finder 141, the information acquisition unit 210 may be provided with solar altitude measured through the altitude finder 141 using the transmitter 121 and the receiver 122, and obtain and provide the solar altitude as operating environment information to the control unit 220.

A film including an electrochromic device and the like may be applied to a window, and when the window including the electrochromic device is a fixture of a fixed-type architectural structure or the like, the electrochromic device may also be said to have fixed azimuth angle. However, when the window including the electrochromic device is a fixture of a movable-type architectural structure or the like, the electrochromic device may also be said to have variable azimuth angle. In addition, when the electrochromic device has variable azimuth angle, the information acquisition unit 210 may be provided with the variable azimuth angle measured through the azimuth finder 142 using the transmitter 121 and the receiver 122, and obtain and provide the variable azimuth angle as operating environment information to the control unit 220. In addition, when the electrochromic device has fixed azimuth angle, the information acquisition unit 210 may be provided with the fixed azimuth angle measured through the azimuth finder 142 using the transmitter 121 and the receiver 122, and obtain and provide the fixed azimuth angle as installation environment information to the control unit 220, and the fixed azimuth angle of the azimuth finder 142 may be set in the control unit 220 independent of the measurement of the azimuth finder 142. In addition, the information acquisition unit 210 may be provided with temperature measured through the thermometer 143 using the transmitter 121 and the receiver 122, and obtain and provide the temperature as operating environment information to the control unit 220.

The control unit 220 is configured to generate a control signal corresponding to capacitance to be applied to the electrochromic device on the basis of the operating environment information obtained by the information acquisition unit 210. Here, the control unit 220 reflects climate characteristics obtained by analyzing the operating environment information to generate a control signal. For example, the control unit 220 may generate a control signal so that visible light transmittance of the electrochromic device reaches a preset transmittance or less within a predetermined period of time according to an altitude comparison result of comparing the solar altitude provided by the information acquisition unit 210 to a preset threshold altitude. Here, the control unit 220 may generate a control signal further on the basis of installation environment information including at least one of fixed azimuth angle and latitude of the electrochromic device. Alternatively, the control unit 220 may generate a control signal according to an azimuth angle comparison result of comparing variable azimuth angle or fixed azimuth angle to a preset threshold azimuth angle and an altitude comparison result. For example, the control unit 220 may generate a control signal according to a difference between the latitude of the electrochromic device and the solar altitude. Alternatively, the control unit 220 may generate a control signal according to a difference between the latitude of the electrochromic device and the solar altitude and temperature. Alternatively, the control unit 220 may generate a control signal according to a latitude and altitude comparison result of the electrochromic device and temperature. Alternatively, the control unit 220 may generate a control signal according to an azimuth angle comparison result of comparing variable azimuth angle or fixed azimuth angle to a preset threshold azimuth angle, and according to a position of the electrochromic device, temperature, and date and time.

The driving unit 230 is configured to apply capacitance corresponding to a control signal of the control unit 220 to the electrochromic device to drive the electrochromic device so that transmittance for a specific wavelength is adjusted.

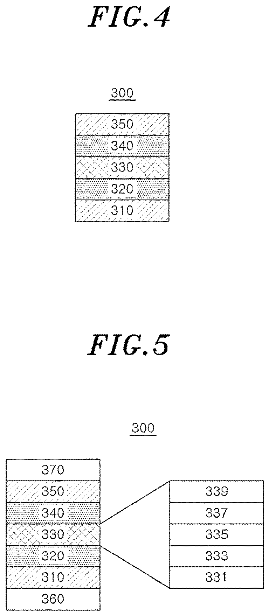

FIG. 4 is a structural view of an electrochromic device according to an embodiment of the present disclosure, and FIG. 5 is a structural view of an electrochromic device according to another embodiment of the present disclosure.

As illustrated in FIGS. 4 and 5, an electrochromic device 300 according to an embodiment may include a first base layer 310, a first barrier layer 320 on the first base layer 310, a light transmissive variable structure 330 on the first barrier layer 320, a second barrier layer 340 on the light transmissive variable structure 330, and a second base layer 350 on the second barrier layer 340. In addition, the electrochromic device 300 may further include a release film layer 360 on a surface opposite to a surface of the first base layer 310 on which the first barrier layer 320 is stacked. In addition, the electrochromic device 300 may further include a hard coating layer 370 on a surface opposite to a surface of the second base layer 350 on which the second barrier layer 340 is stacked.

The first base layer 310 and the second base layer 350 correspond to layers for maintaining transparency and durability, and may include a polymer resin. For example, the first base layer 310 and the second base layer 350 may each include at least one selected from the group consisting of a polyester-based resin, an acrylic-based resin, a polyolefin-based resin, and combinations thereof. For example, the first base layer 310 and the second base layer 350 may each include, but are not limited to, polyethylene terephthalate (PET), polyethylene naphthalate (PEN), or polycarbonate (PC). As another example, the first base layer 310 and the second base layer 350 may each include polyethylene terephthalate (PET). With the first base layer 310 and the second base layer 350 including the polymer resin described above, a flexible electrochromic device having both durability and flexibility may be implemented.

The first base layer 310 and the second base layer 350 may each have a light transmittance of 80 % or more for light with a wavelength of 550 nm. For example, the first base layer 310 and the second base layer 350 may have a light transmittance of 85 % or more or 90 % or more for light with a wavelength of 550 nm, respectively.

The first base layer 310 and the second base layer 350 may each have a haze of 2.0 % or less, 1.8 % or less, or 1.5 % or less.

The first base layer 310 and the second base layer 350 may each exhibit transparency by being satisfied with light transmittance and haze in the ranges described above.

The first barrier layer 320 and the second barrier layer 340 serve to prevent impurities, including moisture or gases, from infiltrating the light transmissive variable structure 330 from the outside.

The first barrier layer 320 may include two or more layers. For example, the first barrier layer 320 may include two layers, or may include three layers.

The second barrier layer 340 may include two or more layers. For example, the second barrier layer 340 may include two layers, or may include three layers.

The first barrier layer 320 may include at least one selected from the group consisting of metal oxides, metal nitrides, metal oxynitrides, metalloid oxides, metalloid nitrides, metalloid oxynitrides, and combinations thereof. For example, the first barrier layer 320 may include at least one selected from the group consisting of metal nitrides, metal oxynitrides, metalloid nitrides, metalloid oxynitrides, and combinations thereof. For example, the first barrier layer 320 may include a metal nitride or a metalloid nitride.

The second barrier layer 340 may include at least one selected from the group consisting of metal oxides, metal nitrides, metal oxynitrides, metalloid oxides, metalloid nitrides, metalloid oxynitrides, and combinations thereof. For example, the second barrier layer 340 may include at least one selected from the group consisting of metal nitrides, metal oxynitrides, metalloid nitrides, metalloid oxynitrides, and combinations thereof. For example, the second barrier layer 340 may include a metal nitride or a metalloid nitride.

The first barrier layer 320 and the second barrier layer 340 may be deposited on the first base layer 310 and the second base layer 350 by a vacuum deposition method, respectively. For example, the first barrier layer 320 and the second barrier layer 340 may be deposited on the first base layer 310 and the second base layer 350 by a sputtering deposition method, respectively. In this case, the deposition raw material may be one or more of a metal or a metalloid, and is not particularly limited in type, but may include, for example, at least one selected from magnesium (Mg), silicon (Si), indium (In), titanium (Ti), bismuth (Bi), germanium (Ge), and aluminum (Al). The deposition reaction gas may include oxygen (O₂) gas or nitrogen (N₂) gas. When oxygen gas is used as the reaction gas, a barrier layer including a metal oxide or a metalloid oxide may be formed, and when nitrogen gas is used as the reaction gas, a barrier layer including a metal nitride or a metalloid nitride may be formed. When oxygen gas and nitrogen gas are appropriately mixed and used as the reaction gas, a barrier layer including a metal oxynitride or a metalloid oxynitride may be formed.

The light transmissive variable structure 330 may include a first electrode layer 331, a first chromic layer 333 on the first electrode layer 331, an electrolyte layer 335 on the first chromic layer 333, a second chromic layer 337 on the electrolyte layer 335, and a second electrode layer 339 on the second chromic layer 337.

The light transmissive variable structure 330 may be a structure in which the first electrode layer 331, the first chromic layer 333, the electrolyte layer 335, the second chromic layer 337, and the second electrode layer 339 are sequentially stacked. For example, the light transmissive variable structure 330 may be a stacked structure whose light transmittance reversibly changes when a predetermined voltage is applied.

When a voltage is applied to the first electrode layer 331 and the second electrode layer 339, the overall light transmittance increases and then decreases due to specific ions or electrons that move through the electrolyte layer 335 from the second chromic layer 337 to the first chromic layer 333. When the light transmittance of the second chromic layer 337 decreases, the light transmittance of the first chromic layer 331 also decreases, and when the light transmittance of the second chromic layer 337 increases, the light transmittance of the first chromic layer 331 also increases.

The first electrode layer 331 and the second electrode layer 339 may each include a transparent electrode or a reflective electrode. For example, one of the first electrode layer 331 or the second electrode layer 339 may be a transparent electrode and the other may be a reflective electrode. Alternatively, both the first electrode layer 331 and the second electrode layer 339 may be transparent electrodes.

The first electrode layer 331 may be deposited and formed on the first barrier layer 320 by a sputtering method. In addition, the second electrode layer 339 may be deposited and formed on the second barrier layer 340 by a sputtering method.

The first chromic layer 333 is a layer whose light transmittance changes when a voltage is applied between the first electrode layer 331 and the second electrode layer 339, and is a layer that imparts variability in light transmittance to the electrochromic device 300.

The first chromic layer 333 includes at least one layer, and two or more layers of different materials may be applied, as necessary.

The first chromic layer 333 may include at least one selected from the group consisting of titanium oxide (TiO), vanadium oxide (V₂O₅), niobium oxide (Nb₂O₅), chromium oxide (Cr₂O₃), manganese oxide (MnO₂), iron oxide (FeO₂), cobalt oxide (CoO₂), nickel oxide (NiO₂), rhodium oxide (RhO₂), tantalum oxide (Ta₂O₅), iridium oxide (IrO₂), tungsten oxide (WO₃), viologen, and combinations thereof.

The first chromic layer 333 may be formed by depositing a raw material on one surface of the first electrode layer 331 by a sputtering method, or by applying a raw material by a wet coating method, followed by drying. For example, the first chromic layer 333 may be formed by applying a raw material to one surface of the first electrode layer 331 by a wet coating method, followed by drying.

The first electrode layer 331 and the first chromic layer 333 have an initial transmittance of 90 % or more. As such, an initial transmittance of 90 % or more exhibits that each layer has been applied very uniformly and is very transparent.

The electrolyte layer 330 is a layer that serves as an ion transport path between the first chromic layer 333 and the second chromic layer 337, and the type of electrolyte used in the electrolyte layer is not particularly limited. For example, the electrolyte layer 330 may include hydrogen ions or Group 1 element ions. For example, the electrolyte layer 330 may include a lithium salt compound. The lithium salt compound may be, but is not limited to, LiClO₄, LiBF₄, LiAsF₆, LiPF₆, LiTFSi, LiFSi, and the like. In addition, the electrolyte layer 330 may include a polymer resin. For example, the electrolyte layer 330 may include an acrylic-based resin, an epoxy-based resin, a silicone-based resin, a polyimide-based resin, or a polyurethane-based resin, but is not limited thereto. For example, the acrylic-based resin may be a thermosetting acrylic-based resin, a photocurable acrylic-based resin, or the like, and the polyurethane-based resin may be a thermosetting polyurethane-based resin, a photocurable polyurethane-based resin, an aqueous polyurethane-based resin, or the like.

The electrolyte layer 335 may be formed by applying a raw material to one surface of either the first chromic layer 333 or the second chromic layer 335 by a wet coating method, followed by drying. When the electrolyte layer 335 is applied by a wet coating method, the thickness of the coating film may be thickened or the thickness of the coating film may be easily controlled, which is advantageous in terms of enhancing ionic conductivity or chromic rate.

The thickness of the electrolyte layer 335 may be 30 µm to 200 µm, 50 µm to 200 µm, 50 µm to 150 µm, 70 µm to 130 µm, or 80 µm to 120 µm. When the thickness of the electrolyte layer 335 satisfies the above ranges, the ion transport path between the first chromic layer 333 and the second chromic layer 335 is secured at an appropriate length while the durability is imparted to the electrochromic device 300, thereby implementing the light transmission change performance at an appropriate rate.

The second chromic layer 337 is a layer whose light transmittance changes when a voltage is applied between the first electrode layer 331 and the second electrode layer 339, and is a layer that imparts variability in light transmittance to the electrochromic device.

The second chromic layer 337 includes at least one layer, and two or more layers of different materials may be applied, as necessary.

The second chromic layer 337 may include at least one selected from the group consisting of nickel oxide (e.g., NiO, NiO₂), manganese oxide (e.g., MnO₂), cobalt oxide (e.g., CoO₂), iridium-magnesium oxide, nickel-magnesium oxide, titanium-vanadium oxide, and combinations thereof. Alternatively, the second chromic layer 337 may include, but is not limited to, a Prussian blue-based pigment.

The second chromic layer 337 may be formed by depositing a raw material on one surface of the second electrode layer 339 by a sputtering method, or by applying a raw material by a wet coating method, followed by drying. For example, the second chromic layer 337 may be formed by applying a raw material to one surface of the second electrode layer 339 by a wet coating method, followed by drying.

The second chromic layer 337 may have an initial transmittance of 50 % or less. As such, an initial transmittance of 50 % or less may mean that the color appears dark blue or pale indigo when viewed with the naked eye.

The first chromic layer 333 may include a material having a chromogenic property complementary to the electrochromic material included in the second chromic layer 337. The complementary chromogenic property means that the types of reactions by which the electrochromic material develops color are different from each other. For example, when an oxidizing chromic material is used in the first chromic layer 333, a reducing chromic material may be used in the second chromic layer 337. Alternatively, when a reducing chromic material is used in the first chromic layer 333, an oxidizing chromic material may be used in the second chromic layer 337. An oxidizing chromic material refers to a material that changes color when an oxidation reaction takes place, and a reducing chromic material refers to a material that changes color when a reduction reaction takes place. That is, when an oxidation reaction takes place in a chromic layer to which an oxidizing chromic material is applied, a coloration reaction takes place, and when a reduction reaction takes place, a decoloration reaction takes place. When a reduction reaction takes place in a chromic layer to which a reducing chromic material is applied, a coloration reaction takes place, and when an oxidation reaction takes place, a decoloration reaction takes place. As such, a material having a complementary chromogenic property is included in each chromic layer, so that the coloration or decoloration may be carried out simultaneously in both layers. In addition, coloration or decoloration may be alternated according to the polarity of the voltage applied to the electrochromic device 300.

The release film layer 360 may include a polyester-based resin including polyethylene terephthalate (PET), polyethylene naphthalate (PEN), or polycarbonate (PC). The release film layer 360 serves to protect the electrochromic device 300 from external moisture or impurities when the electrochromic device 300 is stored and moved. When the electrochromic device 300 is later applied to a transparent window or the like, the electrochromic device 300 may be used after the release film layer 360 is removed, as necessary.

The hard coating layer 370 may include an acrylic-based resin, a silicone-based resin, a polyurethane-based resin, an epoxy-based resin, or a polyimide-based resin. For example, the hard coating layer 370 may have a pencil hardness of 3H or more, 4H or more, or 5H or more, but is not limited thereto. The hard coating layer 370 serves to protect the electrochromic device from external impacts, and may impart excellent hardness because of its resistance to scratches or the like.

The electrochromic device 300 may be applied through a way of simply attaching the electrochromic device to a structure such as a conventional transparent window. For example, the electrochromic device 300 may be attached to one surface of a window, and the window may have a flat surface or a curved surface. In addition, the electrochromic device 300 may be attached to the entire surface of the window, or only a portion of the window. Alternatively, the electrochromic device 300 may be inserted into the window. For example, the electrochromic device 300 may be applied through a way of interposing the electrochromic device 300 between glass substrates. For example, the electrochromic device 300 may be applied by interposing two polyvinyl butyral films (PVB films) between laminated glasses of a window, and interposing the electrochromic device 300 between the two PVB films, and may be stably inserted into the window by compression with heat.

The electrochromic device 300 may adjust the transmittance of infrared rays and ultraviolet rays as well as visible light upon coloration and decoloration. When power is applied to the electrochromic device 300, an electric field is formed between the first electrode layer 331 and the second electrode layer 339, causing coloration and decoloration, which may adjust the transmittance for each wavelength of solar rays. Therefore, it is useful to implement an insulation function and a sunshade function. In addition, the electrochromic device 300 may be manufactured with a large area at a low cost and has low power consumption. Therefore, it is suitable for use in a smart window, a smart mirror, and other next generation architectural window materials.

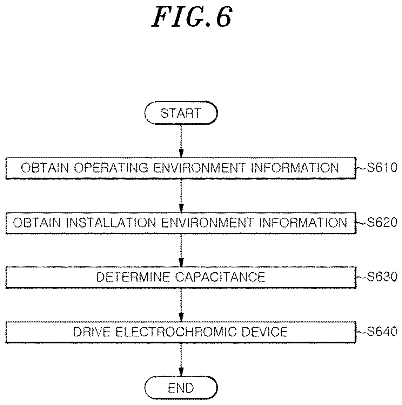

FIG. 6 is a flowchart for describing a method of driving the electrochromic device 300 according to an embodiment of the present disclosure.

Hereinafter, with reference to the accompanying drawings, a process in which transmittance for a specific wavelength is adjusted through color change of the electrochromic device 300 according to an embodiment of the present disclosure will be described.

First, the information acquisition unit 210 of the apparatus 100 of driving an electrochromic device is configured to obtain operating environment information including at least one of solar altitude, variable azimuth angle, and temperature according to an operating environment of the electrochromic device 300, and provides the obtained operating environment information to the control unit 220. Here, the altitude finder 141 may measure and provide solar altitude to the transmitter 121, the azimuth finder 142 may measure and provide variable azimuth angle of the electrochromic device 300 to the transmitter 121, and the thermometer 143 may measure and provide temperature to the transmitter 121. Then, the transmitter 121 may transmit the operating environment information measured by the altitude finder 141, the azimuth finder 142, and/or the thermometer 143, the receiver 122 may receive the operating environment information transmitted from the transmitter 121, and the information acquisition unit 210 may obtain and provide the operating environment information to the control unit 220 (S610).

The control unit 220 is configured to generate a control signal corresponding to capacitance to be applied to the electrochromic device 300 on the basis of the operating environment information obtained by the information acquisition unit 210. Here, the control unit 220 reflects climate characteristics obtained by analyzing the operating environment information to generate a control signal. For example, the control unit 220 may generate a control signal so that visible light transmittance of the electrochromic device 300 reaches a preset transmittance or less within a predetermined period of time according to an altitude comparison result of comparing the solar altitude provided by the information acquisition unit 210 to a preset threshold altitude (S630).

Then, the driving unit 230 of the apparatus 100 of driving an electrochromic device is configured to apply capacitance corresponding to the control signal of the control unit 220 to the electrochromic device 300 to drive the electrochromic device so that the transmittance for a specific wavelength is adjusted (S640).

The weather data observed in Busan in the year of 2000 is exemplified in Table 1.

**[Table 1]**

| Date | | Starting at 40 deg. or more (Time/Elevation angle) | Starting at 40 deg. or less (Time/Elevation angle) |
|---|---|---|---|
| Spring Equinox | 3.20 | 10 o'clock, 40 deg. | 15 o'clock, 40 deg. |
| Summer solstice | 6.21 | 9 o'clock, 44 deg. | 16 o'clock, 42 deg. |
| Autumnal equinox | 9.23 | 10 o'clock, 32 deg. | 15 o'clock, 37 deg. |
| Winter solstice | 12.22 | None (Max. 31 deg.) | |

With reference to the weather data exemplified in Table 1, it can be easily inferred that blocking the light introduced into indoor areas through glass windows of an architectural structure and the like during the season of hot solar rays will help to create a pleasant indoor environment. In step S630, the control unit 220 may generate a control signal that may start a color change at a solar altitude of 40 degrees or more to reach a visible light transmittance of 15 % or less within 10 minutes, and in step S640, the driving unit 230 may adjust the visible light transmittance by applying capacitance corresponding to the control signal to the electrochromic device 300 according to the control signal.

Meanwhile, after step S610, the control unit 220 may obtain installation environment information including at least one of fixed azimuth angle and latitude of the electrochromic device 300, and may generate a control signal on the basis of the installation environment information obtained in step S630 (S620, S630).

The weather data including the azimuth angle (indicating the horizontal angle with respect to true north) for Busan observed in the year of 2000 is shown in Table 2.

**[Table 2]**

| Date | | Starting at 280 deg. or more (Time/Azimuth angle) |
|---|---|---|
| Spring Equinox | 3.20 | None (Max. 274 deg.) |
| Summer solstice | 6.21 | 17 o'clock, 278 deg. |
| Beginning of hottest period | 7.11 | 17 o'clock, 276 deg. |
| End of hottest period | 8.10 | 18 o'clock, 278 deg. |
| Autumnal equinox | 9.23 | None (Max. 275 deg.) |
| Winter solstice | 12.22 | None (Max. 47 deg.) |

With reference to the weather data exemplified in Table 2, it can be inferred that the electrochromic device 300 may be subjected to maintenance of color change and subsequent decoloration during the hot daytime hours of solar rays in summer to maintain indoor pleasantness, and that heating costs may be reduced through sufficient introduction of solar rays into indoor areas in spring, fall, and winter. In step S630, the control unit 220 may generate a control signal so that the color change is maintained at an azimuth angle of 90 to 270 degrees at a solar altitude of 40 degrees or more, and decoloration takes place at a solar altitude of 40 degrees or less or an azimuth angle of 280 degrees or more, and in step S640, the driving unit 230 may apply capacitance corresponding to the control signal to the electrochromic device 300 to adjust the visible light transmittance according to the control signal.

In addition, the electrochromic device 300 may need to have its color change drive controlled differently depending on the latitude of the installation area. Seoul area is exemplified in Table 3 and Busan area is exemplified in Table 4 as operation state information for each latitude of the installation area.

**[Table 3]**

| Latitude | Operation started to Target reached | Date | | Operation started (Time/Elevation angle) | Time to target (Time/Elevation angle) | Free time |
|---|---|---|---|---|---|---|
| 37 deg. north latitude | 42 to 45 deg. | Beginning of spring | 2.3 | None (Max. 35 deg.) | None | - |
| | | Spring Equinox | 3.20 | 10:30 (10 to 11 o'clock, 37 to 45 deg.) | 11:00 | 30 min. |
| | | Summer solstice | 6.21 | 9:00 (42 deg.) | 9:15 (9 to 10 o'clock, 42 to 54 deg.) | 15 min. |
| | | Beginning of hottest period | 7.11 | 9:05 (9 to 10 o'clock, 41 to 52 deg.) | 9:20 (9 to 10 o'clock, 41 to 52 deg.) | 15 min. |
| | | End of hottest period | 8.10 | 9:30 (9 to 10 o'clock, 37 to 47 deg.) | 9:40 (9 to 10 o'clock, 37 to 48 deg.) | 10 min. |
| | | Autumnal equinox | 9.23 | None (Max. 36 deg.) | 10:45 (10 to 11 o'clock, 39 to 47 deg.) | 25 min. |
| | | Beginning of winter | 11.7 | None (Max. 28 deg.) | None | - |
| | | Winter solstice | 12.22 | None (Max. 38 deg.) | None | - |

**[Table 4]**

| Latitude | Operation started to Target reached | Date | | Operation started (Time/Elevation angle) | Time to target (Time/Elevation angle) | Free time |
|---|---|---|---|---|---|---|
| 35 deg. north latitude | 40 to 43 deg. | Beginning of spring | 2.3 | None (Max. 38 deg.) | None | - |
| | | Spring Equinox | 3.20 | 10:00 (40 deg.) | 10:20 (10 to 11 o'clock, 40 to 48 deg.) | 20 min. |
| | | Summer solstice | 6.21 | 8:40 (8 to 9 o'clock, 31 to 44 deg.) | 8:55 (8 to 9 o'clock, 31 to 44 deg.) | 15 min. |
| | | Beginning of hottest period | 7.11 | 8:50 (8 to 9 o'clock, 30 to 42 deg.) | 9:05 (9 to 10 o'clock, 42 to 54 deg.) | 15 min. |
| | | End of hottest period | 8.10 | 9:05 (9 to 10 o'clock, 39 to 51 deg.) | 9:20 (9 to 10 o'clock, 39 to 51 deg.) | 15 min. |
| | | Autumnal equinox | 9.23 | 9:50 (9 to 10 o'clock, 32 to 42 deg.) | 10:05 (10 to 11 o'clock, 42 to 50 deg.) | 15 min. |
| | | Beginning of winter | 11.7 | None (Max. 28 deg.) | None | - |
| | | Winter solstice | 12.22 | None (Max. 38 deg.) | None | - |

With reference to the operation state information exemplified in Table 3 and FIG. 4, in step S630, the control unit 220 may generate a control signal that starts a color change operation at a solar altitude that is 5 degrees higher than the latitude of an installation area to reach a visible light transmittance of 15% or less before the solar altitude reaches an altitude that is 8 degrees higher than the latitude. In step S640, the driving unit 230 may apply capacitance corresponding to the control signal to the electrochromic device 300 to adjust the visible light transmittance according to the control signal.

The operation state information for each color change start time and decoloration start time for Seoul area shown in Table 3 is exemplified in Table 5.

**[Table 5]**

| Latitude | Color change started | Decoloration stared | Date | | Color change started (Time/Elevation angle) | Decoloration stared (Time/Elevati on angle) |
|---|---|---|---|---|---|---|
| 37 deg. north latitude | 42 deg. solar altitude | 27 deg. solar altitude | Beginning of spring | 2.3 | None (Max. 38 deg.) | Decoloration maintained |
| | | | Spring Equinox | 3.20 | 10:00 (40 deg.) | 16:15 (16 to 17 o'clock, 30 to 19 deg.) |
| | | | Summer solstice | 6.21 | 8:40 (8 to 9 o'clock, 31 to 44 deg.) | 17:25 (17 to 18 o'clock, 32 to 20 deg.) |
| | | | Beginning of hottest period | 7.11 | 8:50 (9 to 10 o'clock, 30 to 42 deg.) | 17:25 (17 to 18 o'clock, 32 to 20 deg.) |
| | | | End of hottest period | 8.10 | 9:05 (9 to 10 o'clock, 39 to 51 deg.) | 16:55 (16 to 17 o'clock, 37 to 48 deg.) |
| | | | Autumnal equinox | 9.23 | 9:50 (9 to 10 o'clock, 32 to 42 deg.) | 16:00 (27 deg.) |
| | | | Beginning of winter | 11.7 | None (Max. 38 deg.) | Decoloration maintained |
| | | | Winter solstice | 12.22 | None (Max. 31 deg.) | Decoloration maintained |

With reference to the operation state information exemplified in Table 5, it is necessary to allow decoloration in conjunction with solar altitude in spring, autumn, and winter in Korea, when it is required to introduce solar rays into indoor areas, and to block the hot solar heat in the middle of the day. In step S630, the control unit 220 may generate a control signal to start a color change operation at a solar altitude that is 5 degrees higher than the latitude of an installation area to allow a decoloration operation to be started at a solar altitude that is 10 degrees lower than the latitude, or to allow decoloration to take place at a solar altitude that is 10 degrees lower than the latitude of the installation area when the outside temperature is 20 degrees or less. In step S640, the driving unit 230 may apply capacitance corresponding to the control signal to the electrochromic device 300 to adjust the visible light transmittance according to the control signal.

The operation state information exemplified in Table 6 is an example of changes in temperature and solar altitude for Busan area.

**[Table 6]**

| Latitude | Average temperature of color change started | Decoloration stared solar altitude | Date | | Average temperature / Maximum temperature | Decoloration stared (Time/Elevati on angle) |
|---|---|---|---|---|---|---|
| North latitude 35 deg. | 30 °C | 30 deg. | Beginning of spring | 2.3 | 3.1 °C/ 8 °C | No color change, decoloration maintained |
| | | | Spring Equinox | 3.20 | 9.6 °C/ 14.3 °C | No color change, decoloration maintained |
| | | | Summer solstice | 6.21 | 16.5 °C/ 20.7 °C | Temperature-dependent operation, 17 o'clock (30 deg.) |
| | | | Beginning of hottest period | 7.11 | 23.2 °C/ 26.1 °C | Temperature-dependent operation, 17 o'clock (30 deg.) |
| | | | End of hottest period | 8.10 | 26.4 °C/ 29.8 °C | Temperature-dependent operation, 16: 40 (16 to 17 o'clock, 39 to 26 deg.) |
| | | | Autumnal equinox | 9.23 | 21.2 °C/ 25.3 °C | Temperature-dependent operation, 15: 40 (15 to 16 o'clock, 37 to 27 deg.) |
| | | | Beginning of winter | 11.7 | 14.2 °C/ 19.0 °C | Temperature-dependent operation, 14: 10 (14 to 15 o'clock, 31 to 24 deg.) |
| | | | Winter solstice | 12.22 | 5.5 °C/ 10.2 °C | No color change, decoloration maintained |

With reference to the operation state information exemplified in Table 6, in step S630, the control unit 220 may generate a control signal to start a decoloration operation when a condition of an outdoor temperature of 15 °C or less and a solar altitude of 30 °C or less is simultaneously satisfied after a color change at an outdoor temperature of 15 °C or more. In step S640, the driving unit 230 may apply capacitance corresponding to the control signal to the electrochromic device 300 to adjust the visible light transmittance according to the control signal.

The operation state information exemplified in Table 7 is an example of changes in solar altitude, temperature, time, and elevation angle for Busan area.

**[Table 7]**

| Latitude | Color change started Azimut h angle | Decoloration stared Azimuth angle | Date | | Average/ Maximum Temperatu re | Color change started (Time/ Azimut h angle) | Decoloration stared (Time/Azimu th angle) |
|---|---|---|---|---|---|---|---|
| North latitude 35 deg. | 100 deg. | 280 deg. | Summer solstice | 6.21 | 16.5 °C/ 20.7 °C | 10 o'clock/ 100 deg. | 17:00 (278 deg.) |
| | | | Beginning of hottest period | 7.11 | 23.2 °C/ 26.1 °C | 10 o'clock/ 101 deg. | 17:30 (17 to 18 o'clock, 276 to 284 deg.) |
| | | | End of hottest period | 8.10 | 26.4 °C/ 29.8 °C | 9 o'clock/ 98 deg. | 18:15 (18 to 19 o'clock, 278 to 287 deg.) |

With reference to the operation state information exemplified in Table 7, in step S630, the control unit 220 may generate a control signal to maintain a color change operation when a condition of an outdoor temperature of 18 °C or more and an azimuth angle of 100 degrees or more and less than 280 degrees are simultaneously satisfied in June to August in the summer season. In step S640, the driving unit 230 may apply capacitance corresponding to the control signal to the electrochromic device 300 to adjust the visible light transmittance according to the control signal.

Meanwhile, according to the embodiment described above, each step included in the method of driving an electrochromic device performed by the apparatus for driving an electrochromic device that operates so that transmittance for a specific wavelength is adjusted through color change when electricity is applied may be implemented on a computer-readable recording medium that records a computer program including instructions for performing the steps described above.

As described above, according to an embodiment of the present disclosure, there is an effect of creating a pleasant indoor environment in accordance with a changing operating environment by controlling the visible light transmittance and chromic rate by changing capacitance applied to an electrochromic device according to solar altitude, azimuth angle, temperature, or the like, which depends on an operating environment of the electrochromic device, so that the transmittance of the electrochromic device is adjusted.

Combinations of steps in each flowchart attached to the present disclosure may be executed by computer program instructions. Since the computer program instructions can be mounted on a processor of a general-purpose computer, a special purpose computer, or other programmable data processing equipment, the instructions executed by the processor of the computer or other programmable data processing equipment create a means for performing the functions described in each step of the flowchart. The computer program instructions can also be stored on a computer-usable or computer-readable storage medium which can be directed to a computer or other programmable data processing equipment to implement a function in a specific manner. Accordingly, the instructions stored on the computer-usable or computer-readable recording medium can also produce an article of manufacture containing an instruction means which performs the functions described in each step of the flowchart. The computer program instructions can also be mounted on a computer or other programmable data processing equipment. Accordingly, a series of operational steps are performed on a computer or other programmable data processing equipment to create a computer-executable process, and it is also possible for instructions to perform a computer or other programmable data processing equipment to provide steps for performing the functions described in each step of the flowchart.

In addition, each step may represent a module, a segment, or a portion of codes which contains one or more executable instructions for executing the specified logical function(s). It should also be noted that in some alternative embodiments, the functions mentioned in the steps may occur out of order. For example, two steps illustrated in succession may in fact be performed substantially simultaneously, or the steps may sometimes be performed in a reverse order depending on the corresponding function.

The above description is merely exemplary description of the technical scope of the present disclosure, and it will be understood by those skilled in the art that various changes and modifications can be made without departing from original characteristics of the present disclosure. Therefore, the embodiments disclosed in the present disclosure are intended to explain, not to limit, the technical scope of the present disclosure, and the technical scope of the present disclosure is not limited by the embodiments. The protection scope of the present disclosure should be interpreted based on the following claims and it should be appreciated that all technical scopes included within a range equivalent thereto are included in the protection scope of the present disclosure.

## Claims

1. An apparatus for driving an electrochromic device comprising:
a memory in which an electrochromic device driving program is stored; and
a processor configured to load the electrochromic device driving program from the memory, and to execute the electrochromic device driving program,
wherein the processor is configured to obtain operating environment information including at least one of solar altitude, variable azimuth angle, and temperature according to an operating environment of the electrochromic device that operates so that transmittance for a specific wavelength is adjusted through color change when electricity is applied,
to generate a control signal corresponding to a capacitance to be applied to the electrochromic device on a basis of the operating environment information,
to apply the capacitance corresponding to the control signal to the electrochromic device to drive the electrochromic device so that the transmittance is adjusted, and
to generate the control signal by reflecting climate characteristics obtained by analyzing the operating environment information.

2. The apparatus of claim 1, wherein the processor is configured to generate the control signal so that visible light transmittance of the electrochromic device reaches a preset transmittance or less within a predetermined period of time according to an altitude comparison result of comparing the solar altitude to a preset threshold altitude.

3. The apparatus of claim 2, wherein the processor is configured to generate the control signal further on the basis of installation environment information including at least one of fixed azimuth angle and latitude of the electrochromic device.

4. The apparatus of claim 3, wherein the processor is configured to generate the control signal according to an azimuth angle comparison result of comparing the variable azimuth angle or the fixed azimuth angle to a preset threshold azimuth angles and the altitude comparison result.

5. The apparatus of claim 3, wherein the processor is configured to generate the control signal according to a difference between the latitude of the electrochromic device and the solar altitude.

6. The apparatus of claim 3, wherein the processor is configured to generate the control signal according to a difference between the latitude of the electrochromic device, the solar altitude and the temperature.

7. The apparatus of claim 3, wherein the processor is configured to generate the control signal according to the latitude of the electrochromic device, the altitude comparison result, and the temperature.

8. The apparatus of claim 3, wherein the processor is configured to generate the control signal according to an azimuth angle comparison result of comparing the variable azimuth angle or the fixed azimuth angle to a preset threshold azimuth angle, a position of the electrochromic device, the temperature, and a date and time.

9. A method for driving an electrochromic device, performed by an apparatus for driving an electrochromic device that operates so that transmittance for a specific wavelength is adjusted through color change when electricity is applied, the method comprising:
obtaining operating environment information including at least one of solar altitude, variable azimuth angle, and temperature according to an operating environment of the electrochromic device;
determining a capacitance to be applied to the electrochromic device on a basis of the obtained operating environment information; and
applying the determined capacitance to the electrochromic device to drive the electrochromic device so that the transmittance is adjusted,
wherein the determining the capacitance, climate characteristics obtained by analyzing the operating environment information are reflected.

10. The method of claim 9, wherein applying the determined capacitance, the electrochromic device is driven so that visible light transmittance of the electrochromic device reaches a preset transmittance or less within a predetermined period of time according to an altitude comparison result of comparing the solar altitude to a preset threshold altitude.

11. The method of claim 10, wherein the determining the capacitance, the capacitance is determined further on the basis of installation environment information including at least one of fixed azimuth angle and latitude of the electrochromic device.

12. The method of claim 11, wherein the determining the capacitance, the capacitance is determined according to an azimuth angle comparison result of comparing the variable azimuth angle or the fixed azimuth angle to a preset threshold azimuth angles and the altitude comparison result.

13. The method of claim 11, wherein the determining the capacitance, the capacitance is determined according to a difference between the latitude of the electrochromic device and the solar altitude.

14. The method of claim 11, wherein the determining the capacitance, the capacitance is determined according to a difference between the latitude of the electrochromic device, the solar altitude and the temperature.

15. The method of claim 11, wherein the determining the capacitance, the capacitance is determined according to the latitude of the electrochromic device, the altitude comparison result, and the temperature.

16. The method of claim 11, wherein the determining the capacitance, the capacitance is determined according to an azimuth angle comparison result of comparing the variable azimuth angle or the fixed azimuth angle to a preset threshold azimuth angle, a position of the electrochromic device, the temperature, and a date and time.

17. A non-transitory computer-readable storage medium storing a computer program, wherein the computer program, when executed by a processor, comprises an instruction for causing the processor to perform a method comprising:
obtaining operating environment information including at least one of solar altitude, variable azimuth angle, and temperature according to an operating environment of an electrochromic device;
determining a capacitance to be applied to the electrochromic device on a basis of the obtained operating environment information; and
applying the determined capacitance to the electrochromic device to drive the electrochromic device so that the transmittance is adjusted, and
wherein the determining the capacitance, climate characteristics obtained by analyzing the operating environment information are reflected.
